**Europäisches Patentamt**

(19) **European Patent Office**

**Office européen des brevets**

(11) Publication number: **0 162 351**
**B1**

(12) **EUROPEAN PATENT SPECIFICATION**

(45) Date of publication of patent specification: **28.03.90**

(21) Application number: **85105275.3**

(22) Date of filing: **30.04.85**

(51) Int. Cl.⁵: **G 01 S 13/58,** G 01 S 13/87,
G 01 S 13/42

(54) Method of estimating trajectories and apparatus therefor.

(30) Priority: **24.05.84 JP 103656/84**

(43) Date of publication of application:
**27.11.85 Bulletin 85/48**

(45) Publication of the grant of the patent:
**28.03.90 Bulletin 90/13**

(84) Designated Contracting States:
**DE FR GB**

(56) References cited:
**FR-A-1 605 303**
**GB-A- 817 168**
**GB-A-2 041 688**
**US-A-3 295 128**

(73) Proprietor: **FUJITSU LIMITED**
**1015, Kamikodanaka Nakahara-ku**
**Kawasaki-shi Kanagawa 211 (JP)**

(72) Inventor: **Komata, Asao**
**17-17, Tenjincho 2-chome**
**Fuchu-shi Tokyo 183 (JP)**
Inventor: **Miyashin, Kiyoshi**
**7-4, Tsukimino 8-chome**
**Yamato-shi Kanagawa, 242 (JP)**
Inventor: **Ueno, Hiroshi**
**6-9, Hachimandai 2-chome**
**Isehara-shi Kanagawa, 259-11 (JP)**
Inventor: **Ohnuma, Tohru**
**3-13-207, Nishi-Ikuta 4-chome Tama-ku**
**Kawasaki-shi Kanagawa, 214 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

The present invention relates to a method and apparatus for estimating the trajectory of a projectile such as a rocket shell or a mortar shell with application of a radar system, in particular, to a method of detecting a projectile comprising the steps of

a) monitoring by means of a radar system a first plurality of fan-shaped areas extending from a common origin in a first-reference plane along a predetermined direction defined in said plane, said areas being angularly staggered with regard to the reference plane across a first solid angle elevated with regard to said plane by a first elevation angle,

b) detecting the penetration of a projectile through at least one of said areas from the radar echo resulting from such penetration and

an apparatus for estimating the trajectory of a projectile comprising a radar system having antenna means (100, 200) arranged to monitor a first plurality of fan-shaped areas extending from the antenna means along a predetermined direction defined in a first reference plane, said areas being angularly staggered with regard to the reference plane across a first solid angle forming a first elevation angle with said plane, said radar system further including transmitter means and receiver means connected to said antenna means, the receiver means comprising detector means for detecting the penetration of a projectile through at least one of said areas from the received radar echo as known from US—A—3 29 51 28.

It is well known that the location of an airframe, e.g. an aircraft, can be detected, and that an estimate can be made of its origin and likely course or destination by means of a conventional radar system. Similarly, for a projectile such as a mortar shell, a so-called mortar locating radar can be used. That is, applying the mortar locating radar, a firing point of the mortar shell can be estimated even if the firing point is hidden behind a lay of land such as a hill or a mountain. The estimation can be made by: using two or three sectoral coverages of separated radar fan beams each formed successively by scanning a pencil beam; detecting the trench mortar shell which passes through the sectoral coverages one after another receiving reflected waves from the shell; obtaining 3-dimensioned coordinates of the flying shell by utilising the time information from the scanning of the pencil beam; estimating a trajectory of the flying shell from the coordinate information; and estimating a firing point of the shell.

However, in the mortar locating radar of the prior art, the pencil beam has been used for the sectoral coverages of radar fan beams, so the number of the fan beams is limited to two or three; if more fan beams are required, the radar system would become too complicated; a plurality of the radar beams would have to be used having a different radio frequency (RF) for each radar beam for example. Therefore, in the prior art, there has existed the problem that it is hard to achieve high accuracy for estimating the trajectory and the firing position of the mortar shell.

An object of the present invention is to increase the accuracy of estimation of a firing point of a projectile using simple radar system equipment.

Another object of the present invention is to obtain a great deal of 3-dimensional coordinate information relating to a flying projectile using simple radar apparatus.

Another object of the present invention is to obtain simultaneously coordinate and trajectory information relating to a projectile using simple radar apparatus.

Still another object of the present invention is to realize the above objects with high reliability.

Still another object of the present invention is to realize the above objects at low cost.

The above objects of the present invention are achieved with a method of the type described above, which method is characterized in that the monitoring of said fan-shaped areas is effected by generating a first interferometric pattern of simultaneous antenna lobes each of which lobes is arranged so as to coincide with a different one of said areas.

A plurality or group of fan-shaped antenna lobes can be provided by using at least two antenna elements such as horn antennas. Providing two groups of the interferometric antenna lobes and intersecting the two groups with each other at a suitable angle, a 3-dimension trajectory of the projectile can be obtained by receiving signals reflected from the projectile which successively penetrates at least some of interferometric antenna lobes of the two groups. Thus the firing or launching position of the projectile can be estimated from the obtained 3-dimension trajectory.

The objects of the invention are also solved by an apparatus described above, which apparatus is characterized in that

(i) said antenna means comprises a first interferometric antenna array arranged to generate a first interferometric pattern of simultaneous lobes each of which is arranged so as to coincide with a different one of the areas of said first plurality, and a second interferometric antenna array arranged to generate a second interferometric pattern of simultaneous antenna lobes defining a second plurality of fan-shaped areas extending from the second array in the same direction as said first plurality, the areas of the second plurality being angularly staggered with regard to a second reference plane across a second solid angle forming a second elevation angle with regard to said second plane, the two antenna arrays being so arranged that the fan-shaped areas of the two pluralities intersect each other at a selected intersection angle,

(ii) the transmitter means is arranged to supply pulsed RF signals of different frequencies to the first and the second interferometric antenna array,

(iii) the receiver means comprises generator means arranged to provide to the transmitter means a signal determining the repetition frequency of said pulsed RF signals,

(iv) the detector means of the receiver means includes signal processor means arranged to generate, in response to received echo signals, firstly range information representing the distances from each antenna array to the points at which a projectile penetrates into each one of at least some of the lobes associated with each array and, secondly, time information identifying the times at which a projectile passes through said points,

(v) the receiver means is connected to a computing unit for computing the coordinates of said points with regard to three dimensions, the computation being based on the measured distances, said elevation angles and said intersection angle, and a trajectory estimating unit for computing, on the basis of said coordinates, a three-dimensional trajectory passing through said points.

Thus, applying the interferometric antenna method to a radar apparatus, many interferometric antenna lobes can be provided without using any pencil beam, so that a great deal of the trajectory information can be simultaneously obtained. Then the accuracy of estimating the trajectory of a projectile increases by a simple radar apparatus in high reliability at a low cost.

For a better understanding of the invention, and to show how the same may be carried into effect, reference will now be made, by way of example, to the accompanying drawings, in which:

Fig. 1 is a block diagram of one embodiment of radar apparatus according to the present invention;

Fig. 2 is a pictorial view illustrating a configuration of an embodiment of interferometric antennas of radar apparatus according to the present invention;

Fig. 3 is a schematic section of a group of interferometric antenna lobes through which a projectile is flying;

Fig. 4 is an illustrating diagram showing two interferometric antenna lobes each belonging to respective two groups of the interferometric antenna lobes intersecting each other;

Fig. 5 is a diagram showing separately the projectile penetrating the two groups of the interferometric antenna lobes which intersect each other;

Fig. 6 is a waveform chart showing time relations between the pulse-signals received from a projectile by one group and by the other group of the interferometric antenna lobes; and

Fig. 7 is a block diagram of an embodiment of trajectory estimator of radar apparatus according to the invention.

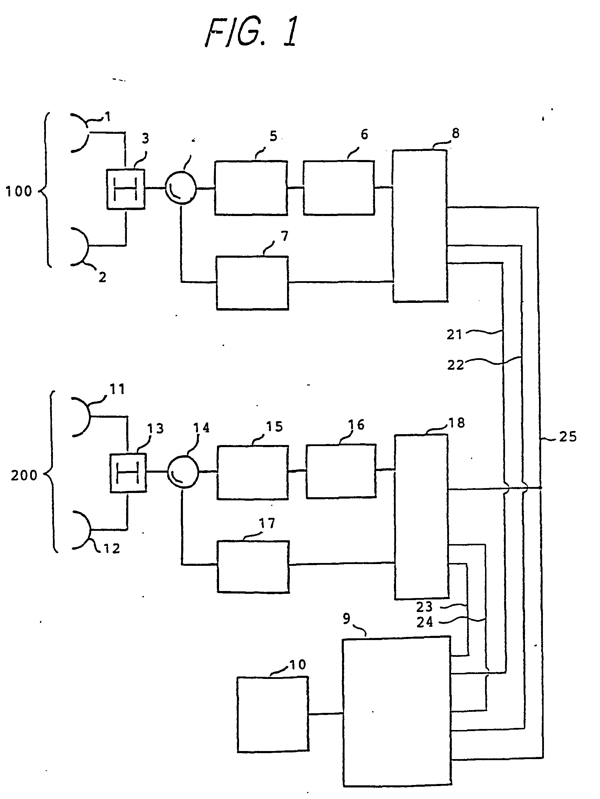

Fig. 1 shows a block diagram of one embodiment of radar apparatus according to the present invention having two interferometric antennas 100 and 200 each consisting of a couple of horn antennas 1 and 2, and 11 and 12 respectively. Each interferometric antenna produces a plurality (group) of interferometric antenna lobes. The radar equipment mainly consists of paired similar units as shown by reference numerals from 1 to 8 and from 11 to 18 in Fig. 1. In the Figure, reference numeral 8 (18) is a signal processor from which a trigger signal having a designated pulse repetition frequency (PRF) is provided; the PRF is determined under consideration of a serviceable range to a target (projectile) and PRFs from the signal processors 8 and 18 are almost equal but are not necessarily equal and synchronized. The trigger signal from the signal processor 8 (18) is fed to a modulator 6 (16) in which a pulse signal is produced and fed to a transmitter 5 (15). The transmitter 5 (15) generates pulsed RF signals such as microwaves or the millimeter waves, and the RFs from the transmitter 5 and 15 are slightly different from each other so that the RF signal transmitted from the one interferometric antenna cannot be detected by the other receiver. The generated pulsed RF signal is fed to a hybrid coupler 3 (13) through a circulator 4 (14). The circulator 4 (14) is to switch automatically the RF signal to the antenna 100 (200) from the transmitter 5 (15) when the radar apparatus transmits the RF signal, and is to switch automatically the RF signal received at the antenna 100 (200) to a receiver 7 (17) when the radar equipment receives the RF signal. The hybrid coupler 3 (13) is to separate transmitting RF signal from the circulator 4 (14) into halves and the halves are fed to the horn antennas 1 (11) and 2 (12) respectively when the RF signal is transmitted, and is to combine received RF signal at the horn antennas 1 (11) and 2 (12) to feed into the receiver 7 (17) when the antenna 100 (200) receives RF signal.

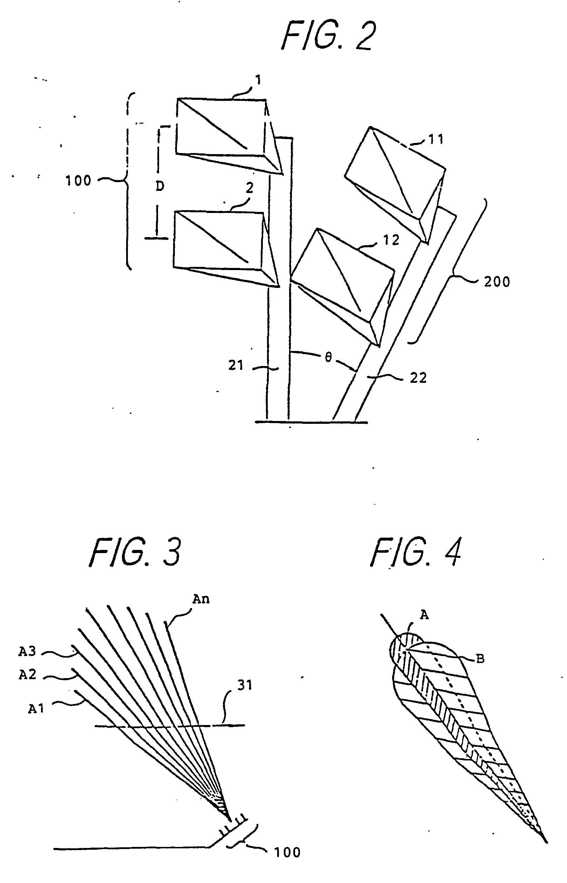

Fig. 2 shows an example of an arrangement of the antennas 100 and 200. In the Figure, the antennas 100 and 200 are arranged on their respective struts 21 and 22 so that center lines of serviceable solid angles (each being composed of respective groups of the antenna lobes of the antennas 100 and 200) intersect at an angle θ.

The characteristics of the antenna lobes such as the serviceable solid angle and a separating angle between the adjacent antenna lobes depends on: directional characteristics of the respective antenna element (horn antenna in Fig. 2); the number of antenna elements; distance between the neighboring antenna elements; and the wave length of the transmitting RF signal. Especially there is a relation between the separating angle γ (radians (rad)) between the adjacent antenna lobes, the distance D (millimeters (mm)) between the neighboring antenna elements, and the wave length λ (mm) as follows:

$$\gamma = \lambda/D \ (\text{rad}) \qquad (1)$$

For example, in Fig. 2, if the horn antennas 1 and 2 are equal with respect to shape and size having the same antenna pattern of 60° and 25° in azimuth and elevation angles, respectively, each of the solid angles of the antenna 100 and 200 is almost equal to the antenna pattern of each horn antenna with respect to the azimuth and elevation angles, and if the distance D is 460 (mm) and the wave length $\lambda$ is 10 (mm), the angle $\gamma$ becomes 10/460 (rad) from the equation (1). Angle 10/460 (rad) corresponds to approximately 1.25 degree of angle, so the interferometric antenna 100 has twenty antenna lobes from the calculation of 25°/1.25°=20 (lobes). Fig. 3 shows a schematic view of a sectional side elevation of the antenna lobes, the Figure illustrates one group of the antenna lobes. In Fig. 3, A1, A2, - - -, and An (n is 20 in the above example) are the antenna lobes in a solid angle. No Figure is provided, but the antenna 200 also provides a plurality of the antenna lobes forming its solid angle. The solid angles of the antennas 100 and 200 are elevated respectively from the horizon and intersect each other at an angle $\theta$. Fig. 4 illustrates intersection of the antenna lobes each belonging to respective antenna lobes of the antenna 100 and 200.

In the above explanation, the number of the antenna lobes "twenty" was derived from the equation (1) by giving the conditions of the directional characteristics of the interferometric antenna and the distance D. However, the distance D is usually an object to be derived from the conditions of the directional characteristics of the interferometric antenna, the number of the antenna lobes, and the wavelength $\lambda$.

When the conditions are given so that the directional characteristics is 60° and 25° in azimuth and elevation angles respectively, the number of the antenna lobes is twenty, the horn antennas have the same shape and size, the number of the horn antennas is two, and the wavelength $\lambda$ is 10 mm, the structure of the horn antenna and the distance D are derived that the structure of the horn antenna can be obtained by the skilled art of the antenna designing so that the depth of the horn antenna along its axis is 200 mm and the vertical length of a horn atenna aperture is also 200 mm and the distance D can be obtained from the equation (1) as follows:

$$\frac{25°}{20} = \frac{360°}{2\pi} \times \frac{10}{D},$$

therefore, D=460 (mm)

where: term 25°/20 is angle $\gamma$ presented in degrees of angle, numeral 10 is the wave length $\lambda$, and term 360°/2$\pi$ is for changing the unit of the angle 25° from degrees of angle to radian. Since the distance D between the horn antennas is obtained as 460 mm and the vertical length of each horn antenna is 200 mm, there is enough space between the horn antennas for installation onto the strut as shown in Fig. 2.

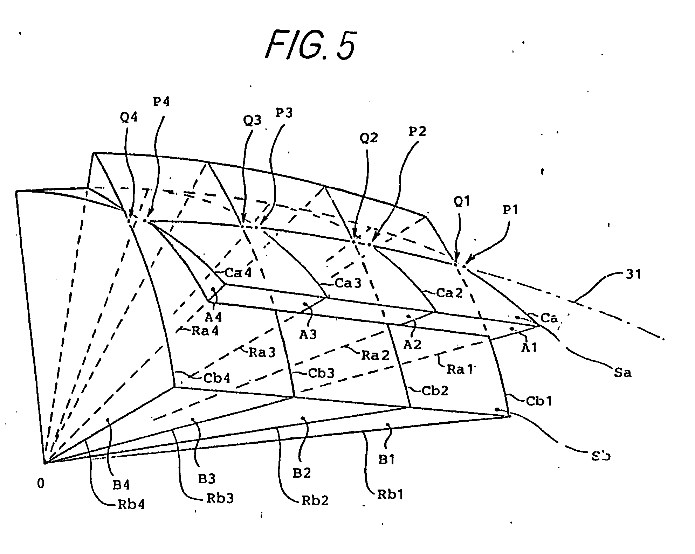

The antennas 100 and 200 receive the radio wave reflected from the projectile every time the projectile flies through a respective antenna lobe. The RF signals received by the antenna 100 are fed to the receiver 7 through the hybrid coupler 3 and the circulator 4 and amplified and sent to the signal processor 8 as shown in Fig. 1. Also signals received by the antenna 200 are fed to the receiver 17 through the hybrid coupler 13 and the circulator 14 and amplified and sent to the signal processor 18. Fig. 5 shows a schematic pictorial diagram illustrating a projectile penetrating the antenna lobes Ai and Bj (i=j=1, 2, - - -, n) of the respective antennas 100 and 200. In Fig. 5, reference symbol O is a point where the radar apparatus is located, the antenna lobes A1, A2, and A3 are shown as a part of the antenna lobes Ai, similarly the antenna lobes B1, B2, and B3 are shown as a part of the antenna lobes Bj. These antenna lobes Ai and Bj form the solid angles respectively, and the solid angles are elevated and intersect at an angle $\theta$ as mentioned before. In Fig. 5, the projectile flies along a trajectory shown by a chained line 31 and when the projectile penetrates the lobe A1, the antenna 100 receives the echo of the projectile and measures a range $R_{a1}$, similarly when the projectile penetrates the next lobe B1, the antenna 200 receives the echo and measures a range $R_{b1}$. Then, the range $R_{a1}$ defines a circle having a radius of the range $R_{a1}$ in the antenna lobe A1; reference numeral $C_{a1}$ shows a part of the circle defined by the angle 60° in the antenna lobe A1, similarly the range $R_{b1}$ defines a part $C_{b1}$ of the circle having a radius of the range $R_{b1}$ in the antenna lobe B1. So, two curved surfaces $S_a$ and $S_b$ can be obtained, the surface $S_a$ includes the circle parts $C_{ai}$ (i=1, 2, - - -, 20) and the other surface $S_b$ includes the circle parts $C_{bj}$ (j=1, 2, - - -, 20). This means that the trajectory of the projectile must be on an intersecting curve of the two curved surfaces $S_a$ and $S_b$; that is, the trajectory including the points P1, Q1, P2, Q2, - - - can be obtained as the solution of simultaneous equations representing curves $S_a$ and $S_b$.

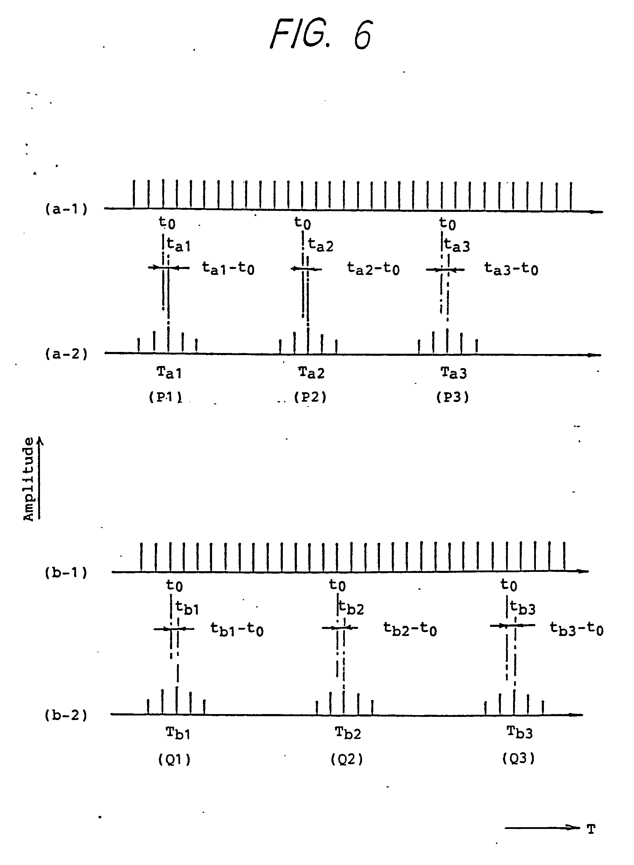

Fig. 6 shows a timing relation of the signals received by the antennas 100 and 200. In the Figure, an ordinate is the amplitude of the transmitted and received pulse-signals and an abscissa is time T. Figs. 6 (a-1) and 6 (b-1) show trains of pulse-signals transmitted from the antennas 100 and 200 respectively; the Figures show that the PRFs and the timing of the transmitting pulses from the antennas 100 and 200 are not necessarily exactly equal to each other. Fig. 6 (a-2) shows a series of the signals received by the antenna 100, and Fig. 6 (b-2) shows that received by the antenna 200. The individual antenna lobe of the antenna 100 or 200 actually has thickness, although it is a fan-shaped lobe, so the projectile reflects several pulse-signals when it passes through the thickness of each antenna lobe. Therefore, the antennas 100 and 200 respectively receive a plurality of the pulse-signals every time the projectile passes through respective antenna lobes. In Figs. 6 (a-2) and 6 (b-2), three groups of the received pulse-signals are shown respectively, the groups representing what is received from respective antenna lobes A1, A2, A3 and B1, B2, B3, and a pulse-signal having the maximum amplitude in each group is a signal reflected by the projectile passing through just a middle point of respective antenna lobe thickness; the points P1, P2, P3, Q1, Q2, and Q3 shows the middle points. Reference symbols $T_{a1}$, $T_{a2}$ and $T_{a3}$ are the times when the projectile passes through the points P1, P2 and P3 respectively, similarly $T_{b1}$, $T_{b2}$, and $T_{b3}$ are the times when the projectile passes through the points Q1, Q2 and Q3 respectively. Reference symbol $t_{a1}$, $t_{a2}$ or $t_{a3}$ are times measured from time $t_0$ which is the time when respective pulse-signal is transmitted from the antenna 100. From respective time differences $t_{a1}-t_0$, $t_{a2}-t_0$ and $t_{a3}-t_0$, the ranges $R_{a1}$, $R_{a2}$ and $R_{a3}$ can be obtained by the radar ranging theory, similarly from the time differences $t_{b1}-t_0$, $t_{b2}-t_0$ and $t_{b3}-t_0$, the ranges $R_{b1}$, $R_{b2}$ and $R_{b3}$ can be obtained, thus, the ranges $R_{ai}$ and $R_{bj}$ ($i=j=1, 2, ---, n$) can be obtained.

When the radar echo signals by the antenna lobes Ai (Bj) come to the signal processor 8 (18), the signal processor 8 (18) discriminates to which antenna lobe each radar echo signal belongs, selects a signal coming from the middle point of each thickness of the antenna lobes Ai (Bj) from each group of the received signals, obtains the ranges $R_{ai}$ ($R_{bj}$), and produces the time information $T_{ai}$ ($T_{bj}$) ($i=j=1, 2, ---, n$) of the projectile passing through the middle points which correspond to the points Pi (Qj) ($i=j=1, 2, ---, n$). In the above description: the discrimination can be made by a fact that the antenna lobes of the antenna 100 and 200 are fixed against the ground having the elevation angle and the intersecting angle θ so the signal first received by the antenna 100 (200) can be designated as the signal of the antenna lobe A1 (B1) and the second is the signal of the antenna lobe A2 (B2) and so on; the selection can be made by detecting a signal having the maximum amplitude from each group of the received signals; and the time information can be provided by using time reference signals fed from a trajectory estimator 9 through a connection line 25. In other words, the signal processor 8 (18) produces the information of the ranges $R_{ai}$ and $R_{bj}$ and the time information $T_{ai}$ and $T_{bj}$ of the projectile which passing through respective antenna lobes, and sends this information to a trajectory estimator 9 through the connection lines 21 and 22 (23 and 24) respectively.

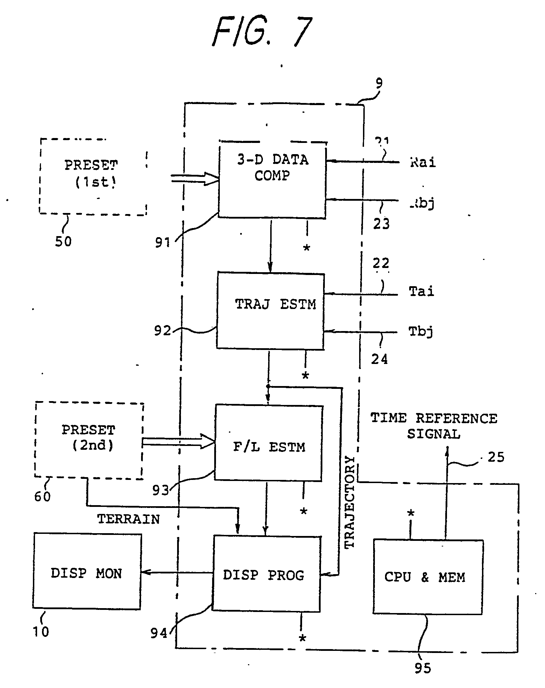

Fig. 7 shows a block diagram of the trajectory estimator 9 connected to a display unit 10. The display unit 10 is a conventional display unit of the prior art.

The signals are $R_{ai}$ and $R_{bj}$ from the signal processor 8 and 18 are fed to a 3-dimension data computing unit (3-D DATA COMP) 91, and preset information such as the directions of the antenna lobes of respective interferometric antenna. These preset conditions are preliminarily given from other source shown by PRESET (1st) 50 in Fig. 7. The 3-D DATA COMP 91 computes the 3-dimension coordinates of the points Pi and Qj through which the projectile has passed.

The 3-dimension coordinates of the points Pi and Qj and the time information $T_{ai}$ and $T_{bj}$ from the signal processors 8 and 18 are fed to a trajectory estimating unit (TRAJ ESTM) 92 in which the speed and acceleration of the projectile at the points Pi and Qj are calculated and finally the trajectory such as the curved line produced by intersecting the curved surfaces $S_a$ and $S_b$ in Fig. 5 are computed. The trajectory estimation can be made by applying Kalman filter algorithm for example. The Kalman filter algorithm is a conventional algorithm for tracking an artificial satellite orbit, and the theory of the Kalman filter is described in: "A New Approach to Linear Filtering and Prediction Problems" by R. E. Kalman, published by Trans. ASME, J. Basic Eng., vol 82d, no. 1 (1960), 35—45; "New Results in Linear Filtering and Prediction Theory" by R. E. Kalman and R. S. Bucy, published by Trans. ASME, J. Basic Eng., vol. 83D, no. 1 (1961), 95—108; and "Kalman Filter" by Taku Arimoto, published by Sangyo Tosho (1977). A very highly accurate estimation can be performed by applying the present invention because much data is provided from the many antenna lobes (as many as forty or fifty) (twice the lobes' number of each interferometric antenna).

The firing point of the projectile can be computed by a firing or launching point estimating unit (F/L ESTM) 93 introducing the estimated trajectory from the TRAJ ESTM 92 and wind and terrain information preliminarily given from other source shown by PRESET (2nd) 60 in Fig. 7.

The computed results of the trajectory and the firing point of the projectile are displayed on the display unit 10. The display can be made with a terrain map on a cathode-ray tube for example so as to simplify the decision to fire the firing point and this is programmed by a display programming unit (DISP PROG) 94.

All the above processes and computations are performed by a central processing unit and memory (CPU & MEM) 95. The reference time signal for the signal processors 8 and 18 is also provided by the CPU & MEM 95. Reference numerals 21, 22, ---, and 25 in Fig. 7 are connecting lines similar to those in Fig. 1.

In the above description, the interferometric antennas are arranged at a single location as shown by the interferometric antennas 100 and 200 in Fig. 1, however, they are not necessarily combined at one place. They can be separately placed, provided the interferometric antenna lobes of respective interferometric antennas intersect each other.

Thus, if there is only one interferometric antenna, 3-dimensional coordinates of the projectile cannot be obtained. However, the interferometric antenna lobes of one interferometric antenna can be used for detecting and ranging the projectile. In Fig. 5, if there is only one group of the antenna lobes Ai, the projectile can be detected and the range to the projectile from the point O can be obtained when the projectile passes through at least one of the antenna lobes Ai. This is another usage of the interferometric radar antenna lobes.

Thus, there is provided a radar system from which 3-dimensional coordinate information of a trajectory is obtained by using two intersecting groups each consisting of a plurality of fan-shaped antenna lobes provided by applying an interferometric method.

## Claims

1. A method of detecting a projectile comprising the steps of

a) monitoring by means of a radar system a first plurality of fan-shaped areas extending from a common origin in a first reference plane along a predetermined direction defined in said plane, said areas being angularly staggered with regard to the reference plane across a first solid angle elevated with regard to said plane by a first elevation angle, and

b) detecting the penetration of a projectile through at least one of said areas from the radar echo resulting from such penetration, the method being characterized in that

c) the monitoring of said fan-shaped areas is effected by generating a first interferometric pattern of simultaneous antenna lobes each of which lobes is arranged so as to coincide with a different one of said areas.

2. The method of claim 1 comprising the steps of

a) measuring the distance between said origin and the point of penetration of a projectile through each one of at least two lobes of said first pattern,

b) measuring the time at which the projectile arrives at each said point,

c) determining the speed and acceleration of a projectile from the measured distances and times.

3. The method of claim 1 or 2 comprising the steps of

a) generating a second interferometric pattern of antenna lobes defining a second plurality of fan-shaped areas extending from an origin in a second reference plane in the same direction as said first plurality, the areas of the second plurality being angularly staggered with regard to said second reference plane across a second solid angle elevated with regard to said second reference plane by a second elevation angle, the second reference plane being inclined with regard to the first reference plane in such a way that the fan-shaped areas of the two pluralities intersect each other at a selected intersection angle,

b) monitoring each plurality of areas by means of radar signals having different frequencies,

c) measuring the distances from the origin of each lobe pattern to the points, at which a projectile penetrates each one of at least some of the lobes of each pattern,

d) measuring the times at which a projectile arrives at said points,

e) determining the speed and acceleration of a projectile from the measured times and distances,

f) computing an estimate of the three-dimensional trajectory of a projectile on the basis of the measured distances to said points and the speed and acceleration of a projectile at said points by taking also into account the elevation angles of said solid angles and said intersection angle.

4. An apparatus for estimating the trajectory of a projectile comprising a radar system having antenna means (100, 200) arranged to monitor a first plurality of fan-shaped areas extending from the antenna means along a predetermined direction defined in a first reference plane, said areas being angularly staggered with regard to the reference plane across a first solid angle forming a first elevation angle with said plane, said radar system further including transmitter means (5, 6, 15, 16) and receiver means (7, 8, 17, 18) connected to said antenna means, the receiver means comprising detector means (8, 18) for detecting the penetration of a projectile through at least one of said areas from the received radar echo, the apparatus being characterized in that

(i) said antenna means comprises a first interferometric antenna array (100) arranged to generate a first interferometric pattern of simultaneous lobes each of which is arranged so as to coincide with a different one of the areas of said first plurality, and a second interferometric antenna array (200) arranged to generate a second interferometric pattern of simultaneous antenna lobes defining a second plurality of fan-shaped areas extending from the second array in the same direction as said first plurality, the areas of the second plurality being angularly staggered with regard to a second reference plane across a second solid angle forming a second elevation angle with regard to said second plane, the two antenna arrays being so arranged that the fan-shaped areas of the two pluralities intersect each other at a selected intersection angle,

(ii) the transmitter means is arranged to supply pulsed RF signals of different frequencies to the first and the second interferometric antenna array,

(iii) the receiver means comprises generator means (8, 18) arranged to provide to the transmitter means a signal determining the repetition frequency of said pulsed RF signals,

(iv) the detector means of the receiver means includes signal processor means (8, 18) arranged to generate, in response to received echo signals, firstly range information representing the distances from each antenna array to the points at which a projectile penetrates into each one of at least some of the lobes associated with each array and, secondly, time information identifying the times at which a projectile passes through said points,

(v) the receiver means is connected to a computing unit (91) for computing the coordinates of said points with regard to three dimensions, the computation being based on the measured distances, said elevation angles and said intersection angle, and a trajectory estimating unit (92) for computing, on the basis of said coordinates, a three-dimensional trajectory passing through said points.

5. Apparatus according to claim 4, wherein each antenna means (100, 200) comprises two antenna elements (1, 2; 11, 12).

6. Apparatus according to claim 5, said apparatus further comprising:

hybrid couplers (3, 13) each for dividing an RF signal from said transmitter means (5, 15) into halves each being fed to a respective antenna element of the respective antenna means (100, 200) and for combining RF signals received by each antenna element of the respective antenna means into a single signal; and

circulators (4, 14) each for automatically supplying said RF signal from said transmitter means (5, 15) to said hybrid coupler (3, 13) and for automatically supplying said single signal which comes through said hybrid coupler (3, 13) to the respective receiver means (7, 17).

7. Apparatus according to claim 4, 5 or 6, wherein each said antenna element comprises a horn antenna.

**Patentansprüche**

1. Verfahren zum Erfassen eines Projektils, mit den Schritten:

a) Überwachen mittels eines Radarsystems einer ersten Vielzahl von fächerförmigen Bereichen, die sich von einem gemeinsamen Ursprung in einer ersten Bezugsebene entlang einer vorbestimmten, in der Ebene definierten Richtung erstrecken, wobei die Bereiche in Bezug auf die Bezugsebene über einen ersten, in Bezug auf die Ebene um einen ersten Elevationswinkel angehobenen Raumwinkel winkelmäßig gestaffelt sind, und

b) Erfassen des Eindringens eines Projektils durch wenigstens einen der Bereiche von dem Radarecho, das aus einem darartigen Eindringen resultiert, dadurch gekennzeichnet, daß

c) das Überwachen der flächenförmigen Bereiche durch Erzeugen eines ersten interferometrischen Musters von simultanen Antennenstrahlungskeulen ausgeführt wird, wobei jeder der Strahlenkeulen derart angeordnet ist, daß sie mit einem unterschiedlichen der Bereiche zusammenfüllt.

2. Verfahren nach Anspruch 1, gekennzeichnet durch die Schritte:

a) Messen des Abstands zwischen dem Ursprung und dem Eindringungspunkt eines Projektils durch jede von wenigstens zwei Strahlenkeulen des ersten Musters,

b) Messen des Zeitpunkts, zu welchem das Projektil an jedem Punkt ankommt,

c) Feststellen der Geschwindigkeit und Beschleunigung eines Projektils aus den gemessenen Abständen und Zeiten.

3. Verfahren nach Anspruch 1 oder 2, gekennzeichnet durch die Schritte:

a) Erzeugen eines zweiten interferometrischen Musters von Antennenstrahlungskeulen, die eine zweite Vielzahl von fächerförmigen Bereichen definieren, die sich von einem Ursprung in einer zweiten Bezugsebene in die gleiche Richtung wie die erste Vielzahl erstrecken, wobei die Bereiche der zweiten Vielzahl in Bezug auf die zweite Bezugsebene um einen zweiten, in Bezug auf die zweite Bezugsebene durch einen zweiten Elevationswinkel hochgehobenen Raumwinkel winkelmäßig gestaffelt sind, und die zweite Bezugsebene in Bezug auf die erste Bezugsebene derart geneigt ist, daß sich die fächerförmigen Bereiche der zwei Vielzahlen unter einem ausgewählten Schnittwinkel schneiden,

b) Überwachung jeder Vielzahl von Bereichen mittels Radarsignalen mit unterschiedlichen Frequenzen,

c) Messen der Abstände vom Ursprung jedes Strahlungskeulenmusters bis zu den Punkten, an welchen ein Projektil jede einzelne von wenigstens einigen der Strahlungskeulen jedes Musters durchdringt,

d) Messen der Zeitpunkte, zu welchen ein Projektil an den Punkten ankommt,

e) Feststellen der Geschwindigkeit und Beschleunigung eines Projektils aus den gemessenen Zeiten und Abständen,

f) Berechnen einer Schätzung der dreidimensionalen Flugbahn eines Projektils, basierend auf den gemessenen Abständen zu den Punkten, und der Geschwindigkeit und Beschleunigung eines Projektils an den Punkten, unter Berücksichtigung der Elevationswinkel der Raumwinkel und des Schnittwinkels.

4. Gerät zur Schätzung der Flugbahn eines Projektils mit einem Radarsystem mit Antennenmitteln (100, 200), die zum Überwachen einer ersten Vielzahl von fächerförmigen Bereichen, die sich von den Antennenmitteln entlang einer vorbestimmten, in einer ersten Bezugsebene definierten Richtung erstrecken, ausgebildet sind, wobei die Bereiche in Bezug auf die Bezugsebene über einen ersten Elevationswinkel mit der Ebene bildenden Raumwinkel winkelmäßig gestaffelt sind, das Radarsystem weiter Übertragungsmittel (5, 6, 15, 16) und Empfangsmittel (7, 8, 17, 18) enthält, die mit den Antennenmitteln verbunden sind, und die Erfassungsmittel (8, 18) zum Erfassen des Eindringens eines Projektils durch wenigstens einen der Bereiche von dem empfangenen Radarecho enthalten, dadurch gekennzeichnet, daß

(i) die Antennenmittel eine erste interferometrische Antennenanordnung (100) umfassen, die zum Erzeugen eines ersten interferometrischen Musters von simultanen Strahlungskeulen ausgebildet ist, von denen jede so ausgebildet ist, daß sie mit einem unterschiedlichen der Bereiche der ersten Vielzahl zusammenfällt, und eine zweite interferometrischen Antennenanordnung (200) umfassen, die zum Erzeugen eines zweiten interferometrischen Musters von simultanen Antennenstrahlungskeulen ausgebildet ist, die eine zweite Vielzahl von fächerförmigen Bereichen definiert, die sich von der zweiten Anordnung in die gleiche Richtung wie die erste Vielzahl erstrecken, wobei die Bereiche der zweiten Vielzahl in Bezug auf eine zweite Bezugsebene über einen zweiten, einen zweiten Elevationswinkel in Bezug auf die die zweite Ebene bildenden Raumwinkel winkelmäßig gestaffelt sind, und die zwei Antennenanordnungen derart angeordnet sind, daß sich die fächerförmigen Bereiche der zwei Vielzahlen unter einem ausgewählten Schnittwinkel schneiden;

(ii) die Übertragungsmittel zum Zuführen von gepulsten RF-Signalen unterschiedlicher Frequenz zu den ersten und zweiten interferometrischen Antennenanordnungen ausgebildet sind;

(iii) die Empfangsmittel Erzeugungsmittel (8, 18) umfassen, die zum Zuführen eines Signals zu den Übertragungsmitteln angeordnet sind, das die Wiederholungsfrequenz der gepulsten RF-Signale bestimmt;

(iv) die Erfassungsmittel der Empfangsmittel Signalprozessormittel (8, 18) enthalten, die zum Erzeugen im Ansprechen auf empfangene Echosignale erstens von Entfernungsdaten, die den Abständen von jeder Antennenanordnung zu den Punkten, an welchen ein Projektil in jede einzelne von wenigstens einigen der jeder Anordnung zugeordneten Strahlenkeulen eindringt und zweitens von Zeitdaten zum Identifizieren der Zeitpunkte, an welchen ein Projektil durch die Punkte fliegt, ausgebildet sind;

(v) die Empfangsmittel mit einer Recheneinheit (91) zum Berechnen der Koordinaten der Punkte in Bezug auf drei Dimensionen verbunden und, wobei das Berechnen auf den gemessenen Abständen, den Elevationswinkeln und den Schnittwinkeln basiert, und mit einer Flugbahnschätzeinheit (92) zum Berechnen, basierend auf den Koordinaten, einer durch die Punkte verlaufenden dreidimensionalen Flugbahn verbunden sind.

5. Gerät nach Anspruch 4, dadurch gekennzeichnet, daß jedes Antennenmittel (100, 200) zwei Antennenelemente (1, 2; 11, 12) umfaßt.

6. Gerät nach Anspruch 5, gekennzeichnet durch:

— Hybridkoppler (3, 13), jeder zum Teilen eines RF-Signals von den Übertragungsmittel (5, 15) in Hälften, von denen jede einem entsprechenden Antennenelement der entsprechenden Antennenmittel (100, 200) zugeführt wird, und zum Kombinieren von von jedem Antennenelement der entsprechenden Antennenmittel empfangenen Signalen in ein einzelnes Signal; und

— Zirkulatoren (4, 14), jeder zum automatischen Zuführen des RF-Signals von den Übertragungsmittel (5, 15) zu dem Hybridkoppler (3, 13) und zum automatischen Zuführen des einzelnen Signals, das durch den Hybridkoppler (3, 13) kommt, zu den entsprechenden Empfangsmittel (7, 17).

7. Gerät nach Anspruch 4, 5 oder 6, dadurch gekennzeichnet, daß jedes Antennenelement eine Hornantenne umfaßt.

**Revendications**

1. Un procédé de détection d'un projectile comprenant les opérations suivantes:

a) on surveille au moyen d'un système de radar un premier ensemble de zones en forme d'éventail s'étendant à partir d'une origine commune dans une premier plan de référence, dans une direction prédéterminée qui est définie dans ce plan, ces zones étant étagées de façon angulaire par rapport au plan de référence, sur un premier angle solide situé à un certain angle de site au-dessus du plan précité, et

b) on détecte la pénétration d'un projectile dans l'une au moins des zones précitées, au moyen de l'écho radar qui résulte de cette pénétration, le procédé étant caractérisé en ce que:

c) le contrôle des zones en forme d'éventail est effectué en produisant une première configuration interférométrique de lobes d'antenne simultanés, chacun de ces lobes étant défini de façon à coïncider avec l'une différente des zones précitées.

2. Le procédé de la revendication 1, comprenant les opérations suivantes:

a) on mesure la distance entre l'origine et le point de pénétration d'un projectile dans chaque lobe parmi au moins deux lobes de la première configuration,

b) on mesure l'instant auquel le projectile arrive à chaque point précité,

c) on détermine la vitesse et l'accélération du projectile à partir des distances et des instants mesurés.

3. Le procédé de la revendication 1 ou 2, comprenant les opérations suivantes:

a) on produit une seconde configuration interférométrique de lobes d'antenne, définissant un second ensemble de zones en forme d'éventail qui s'étendent à partir d'une origine dans un second plan de référence, dans la même direction que le premier ensemble, les zones du second ensemble étant étagées de façon angulaire par rapport au second plan de référence, sur un second angle solide qui se trouve à un second angle de site au-dessus du second plan de référence, le second plan de référence étant incliné par rapport au premier plan de référence d'une matière telle que les zones en forme d'éventail des deux ensembles se coupent sous un angle d'intersection sélectionné,

b) on surveille chaque ensemble de zones au moyen de signaux de radar ayant des fréquences différentes,

c) on mesure les distances, à partir de l'origine de chaque configuration de lobes, jusqu'aux points auxquels un projectile pénètre dans chaque lobe parmi certains au moins des lobes de chaque configuration,

d) on mesure les instants auxquels un projectile arrive aux points précités,

e) on détermine la vitesse et l'accélération d'un projectile à partir des instants et des distances mesurés,

f) on calcule une estimation de la trajectoire tridimensionnelle d'un projectile, sur la base des distances mesurées jusqu'aux points précités, et de la vitesse et de l'accélération d'un projectile à ces points, en tenant compte également des angles de site des angles solides et de l'angle d'intersection.

4. Un dispositif pour estimer la trajectoire d'un projectile, comprenant un système de radar qui comporte une structure d'antennes (100, 200) conçue pour surveiller un premier ensemble de zones en forme d'éventail, qui s'étendent à partir de la structure d'antenne, dans une direction prédéterminée qui est définie dans un premier plan de référence, ces zones étant étagées de façon angulaire par rapport au plan de référence, sur un premier angle solide qui forme un premier angle solide qui forme un premier angle de site avec le plan précité, ce système de radar comprenant en outre des moyens émetteurs (5, 6, 15, 16) et des moyens récepteurs (7, 8, 17, 18) connectés à la structure d'antennes, les moyens récepteurs comprenant des moyens détecteurs (8, 18) destinés à détecter la pénétration d'un projectile dans l'une au moins des zones, sur la base de l'écho radar qui est reçu, l'appareil étant caractérisé en ce que:

(i) la structure d'antennes comprend un premier réseau d'antennes interférométriques (100) conçu pour produire une première configuration interférométrique de lobes simultanés, chacun d'eux étant défini de façon à coïncider avec l'une différente des zones du premier ensemble, et un second réseau d'antennes interférométriques (200) conçu pour produire une seconde configuration interférométrique de lobes d'antenne simultanés définissant un second ensemble de zones en forme d'éventail qui s'étendent à partir du second réseau, dans la même direction que le premier ensemble, les zones du second ensemble étant étagées de façon angulaire par rapport à un second plan de référence, sur un second angle solide formant un second angle de site par rapport au second plan précité, les deux réseaux d'antennes étant disposés de façon que les zones en forme d'éventail des deux ensembles se coupent mutuellement sous un angle d'intersection sélectionné.

(ii) les moyens émetteurs sont conçus pour appliquer des signaux RF sous forme d'impulsions de différentes fréquences aux premier et second réseaux d'antennes interférométriques,

(iii) les moyens récepteurs comprennent des moyens générateurs (8, 18) qui sont conçus pour appliquer aux moyens émetteurs un signal qui détermine la fréquence de répétition des signaux RF sous forme d'impulsions.

(iv) les moyens détecteurs des moyens récepteurs comprennent des moyens de traitement de signal (8, 18) qui sont conçus pour produire, sous la dépendance de signaux d'écho reçus, premièrement une information de distance représentant les distances de chaque réseau d'antennes jusqu'aux points auxquels un projectile pénètre dans chaque lobe parmi certains au moins des lobes qui sont associés à chaque réseau, et, secondement, une information de temps qui identifie les instants auxquels un projectile passe par les points précités,

(v) les moyens récepteurs sont connectés à une unité de calcul (91) qui est destinée à calculer les coordonnées des points précités par rapport aux trois dimensions, le calcul étant basé sur les distances mesurées, les angles de site et l'angle d'intersection, et à une unité d'estimation de trajectoire (92) qui est destinée à calculer, sur la base des coordonnées précitées, une trajectoire tridimensionnelle qui passe par les points précités.

5. Dispositif selon la revendication 4, dans lequel chaque structure d'antennes (100, 200) comprend deux éléments d'antenne (1, 2; 11, 12).

6. Dispositif selon la revendication 5, comprenant en outre:

des coupleurs hybrides (3, 13) ayant chacun pour fonction de diviser un signal RF provenant des moyens émetteurs (5, 15) en deux moitiés qui sont respectivement appliquées à un élément d'antenne respectif de la structure d'antennes respective (100, 200), et de combiner en un seul signal des signaux RF qui sont reçus par chaque élément d'antenne de la structure d'antennes respective; et

des circulateurs (4, 14), chacun d'eux étant destiné à appliquer automatiquement au coupleur hybride (3, 13) le signal RF qui provient des moyens émetteurs (5, 15), et à appliquer automatiquement aux moyens récepteurs respectifs (7, 17) le signal unique qui arrive par le coupleur hybride (3, 13).

7. Dispositif selon la revendication 4, 5 ou 6, dans lequel chaque élément d'antenne consiste en une antenne cornet.

# FIG. 1

*FIG. 2*

*FIG. 3*

*FIG. 4*

## FIG.5

# FIG. 6

## FIG. 7